# DEMANDE DE BREVET EUROPEEN

(11) **EP 1 093 198 A1**
(43) Date de publication de la demande: **18.04.2001**
(21) Numéro de dépôt: 00440226.9
(22) Date de dépôt: 11.08.2000
(51) Int. Cl.: H02B 1/50

(54) **Borne de distribution rétractable**

(30) Priorité: 15.10.1999 FR 9913110
(71) Demandeur: Steinle Louis Sarl, 68000 Colmar (FR)
(72) Inventeur: Capaces, Claude, 68320 Muntzenheim (FR)
(74) Mandataire: Nithardt, Roland

(57) **Abrégé**

La présente invention concerne une borne de distribution d'énergie encastrable et rétractable, légère, facile à transporter, à implanter et à manoeuvrer, qui ne nécessite pas d'entretien et offre une grande sécurité d'utilisation.

La borne (1) comprend un caisson (2) à sceller dans le sol et fermé par un couvercle (5) solidaire d'un chariot (3) monté coulissant dans ledit caisson (2) grâce à des glissières (16) coulissant sur des rails (12). Le chariot (3) est agencé pour recevoir un coffret de distribution d'énergie (4). Il est déplacé verticalement entre une position rétractée dans le caisson (2) et une position haute au-dessus du sol au seul moyen d'un dispositif d'équilibrage par contrepoids (10) prévu à l'arrière du caisson (2). De plus, le couvercle (5) est agencé pour former un support pour des matières harmonisées au sol environnant de sorte que la borne, en position rétractée, est invisible.

## Description

La présente invention concerne une borne de distribution rétractable comprenant un caisson à sceller dans le sol et fermé par un couvercle, un chariot monté coulissant dans ledit caisson grâce à des moyens de coulissement, ledit chariot étant agencé pour recevoir un coffret de distribution d'énergie, et des moyens de levage coopérant avec lesdits moyens de coulissement du chariot et agencés pour entraîner le déplacement vertical dudit chariot entre une position rétractée dans le caisson et une position haute au-dessus du sol.

Une telle borne est par exemple décrite dans le brevet européen EP-B-0 775 377. Selon ce dispositif, les moyens de levage comportent des vérins à gaz ou électriques. Dans la publication DE-U-92 17 542, les moyens de levage sont constitués d'une tige filetée actionnée par une manivelle ou un moteur. Ces différents systèmes ne sont pas fiables dans le temps et nécessitent de l'entretien. Ils nécessitent également une alimentation électrique constante pour actionner les vérins ou le moteur. D'autre part, le caisson décrit dans le brevet EP-B-0 775 377 est réalisé en béton et est donc particulièrement lourd. Enfin, le chariot est bloqué en position rétractée ou en position haute au moyen de serrures. Cela signifie qu'il est nécessaire d'actionner une clé et donc d'effectuer une intervention manuelle pour bloquer le chariot en toute sécurité. Cette intervention peut s'avérer délicate si l'utilisateur n'a pas les mains libres. Il existe également un risque d'oublier de verrouiller la serrure maintenant le chariot en position haute puisque le blocage n'est pas automatique. La borne risque alors de se rétracter à tout moment de manière intempestive.

Une autre solution a été développée dans la demande de brevet français FR-A-2 768 570 qui décrit une borne d'alimentation en électricité pour un aéronef en stationnement. La borne comporte des moyens de levage du support 14 constitués par des pistons 56 et complétés par un ensemble de contrepoids 79 qui sont adaptés pour s'opposer à l'effort exercé sur les moyens de levage 56 par le support 14. Là encore, les pistons nécessitent un entretien et une alimentation électrique de leur moteur. D'autre part, le couvercle est équipé d'un dispositif lumineux pour indiquer aux utilisateurs son emplacement. Cela signifie que cette borne de distribution ne peut pas être implantée discrètement dans un lieu public.

La présente invention vise à pallier ces inconvénients en proposant une borne de distribution légère, facile à transporter, à implanter et à manoeuvrer, qui ne nécessite pas d'entretien, qui offre une grande sécurité d'utilisation et qui peut être implantée dans un lieu public tout en restant invisible lorsqu'elle n'est pas utilisée.

Dans ce but, l'invention concerne une borne de distribution du genre indiqué en préambule, caractérisée en ce que lesdits moyens de levage sont constitués uniquement d'un dispositif d'équilibrage par contrepoids et en ce que le couvercle est agencé pour former un support pour des matières harmonisées au sol environnant, de sorte que la borne, en position rétractée, est invisible.

D'une manière avantageuse, le couvercle présente quatre rebords verticaux dirigés vers le haut de manière à former ledit support pour des matières harmonisées au sol environnant.

Le dispositif d'équilibrage peut comprendre au moins un galet à gorge monté sur un palier fixé au caisson, au moins un contrepoids de base, et au moins un câble passant dans la gorge du galet et dont une extrémité est reliée au contrepoids de base et l'autre extrémité est reliée au chariot.

D'une manière avantageuse, le dispositif d'équilibrage comprend des contrepoids additionnels s'ajoutant au contrepoids de base pour permettre un équilibrage parfait du chariot. Pour cela, le contrepoids de base peut comprendre des ergots et les contrepoids additionnels peuvent présenter la forme de plaques percées de manière à s'encastrer sur lesdits ergots et à s'empiler les uns sur les autres.

De préférence, le caisson comporte quatre parois latérales formant un parallélépipède rectangle, lesdites parois étant entourées d'au moins un élément raidisseur horizontal en forme de U.

Les moyens de coulissement peuvent comprendre deux rails verticaux fixés sur deux parois internes en vis-à-vis du caisson et deux glissières verticales en U formées sur la face arrière du chariot et coulissant sur lesdits rails. D'une manière avantageuse, la face arrière du chariot entre les deux glissières présente une ouverture pour le passage du palier et du câble du dispositif d'équilibrage par contrepoids et les deux parois latérales de ladite ouverture forment lesdites glissières. Ces dernières peuvent être reliées à leur base par une traverse, une extrémité du câble étant alors reliée à ladite traverse.

D'une manière avantageuse, la borne comprend un dispositif de sécurité agencé pour empêcher la chute du chariot en cas de défaillance du dispositif d'équilibrage par contrepoids. Ce dispositif de sécurité comprend un rail vertical de sécurité fixe disposé à l'intérieur du caisson et présentant plusieurs orifices, un cliquet relié au câble du dispositif d'équilibrage et monté pivotant sur le chariot et un ressort agencé pour solliciter le cliquet en direction du rail de sécurité en cas de défaillance et pour enclencher ledit cliquet dans un orifice dudit rail de sécurité.

De préférence, le couvercle est solidaire du chariot. Il peut être muni sur sa face supérieure de raidisseurs.

D'une manière avantageuse, la borne selon l'invention comprend un dispositif de verrouillage du chariot en position rétractée. Ce dispositif de verrouillage peut comprendre un verrou à loquet prévu dans le couvercle, ledit loquet étant agencé pour s'engager dans un logement correspondant prévu sur le caisson.

Dans une autre variante, le dispositif de verrouillage comprend un pêne mobile sollicité par un ressort pour coopérer avec un ergot de verrouillage prévu en correspondance sur le caisson, de manière à verrouiller automatiquement le chariot en position rétractée.

De préférence, ledit dispositif de verrouillage est actionné par une clé également utilisée comme poignée pour soulever le couvercle.

La borne selon l'invention peut également comprendre un dispositif de blocage automatique du chariot en position haute. Ce dispositif de blocage peut être prévu sur au moins une paroi latérale du chariot et peut comprendre un élément de blocage monté pivotant et comportant un ergot agencé pour s'enclencher automatiquement sur l'extrémité supérieure du rail quand le chariot est en position haute.

La borne selon l'invention peut également comprendre une cornière périphérique disposée sur le pourtour du couvercle et du caisson et agencée pour empêcher la chute de déchets entre le caisson et ledit couvercle.

Elle peut comprendre aussi une plaque d'étanchéité disposée à l'intérieur du caisson et comportant une ouverture pour le passage du chariot, ladite plaque étant agencée pour empêcher la chute de déchets dans le caisson lorsque le chariot est en position haute.

La présente invention et ses avantages apparaîtront mieux dans la description suivante d'un exemple de réalisation, en référence aux dessins annexés, dans lesquels:
- la figure 1 est une vue en perspective de la borne, le chariot étant en position haute,

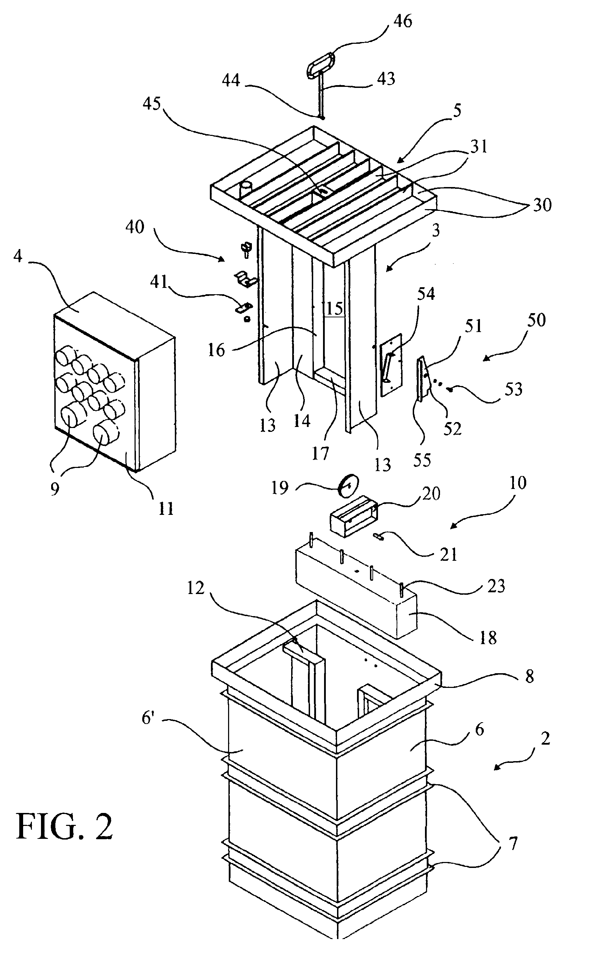

- la figure 2 représente une vue éclatée des différents éléments constituant la borne selon l'invention,

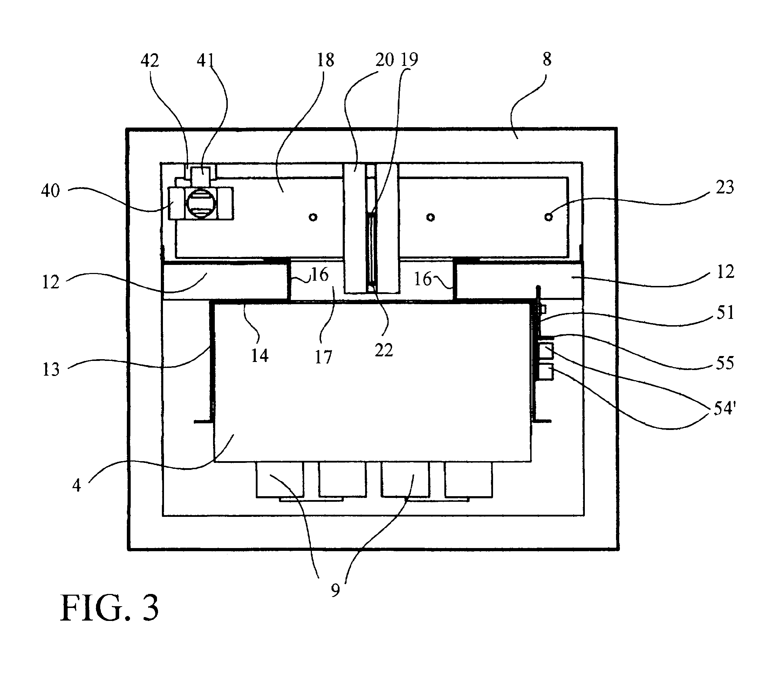

- la figure 3 est une vue de dessus de la borne, le couvercle ayant été retiré,
- la figure 4 est une vue de côté de la borne, le chariot étant en position rétractée,
- la figure 5 est une vue en coupe axiale de la borne, le chariot étant en position haute
- la figure 6 est une vue de côté d'une variante de la borne, le chariot étant en position rétractée, et
- la figure 7 est une vue en coupe de détail d'un dispositif de verrouillage du chariot en position rétractée.

En référence aux figures, la borne de distribution 1 comprend un caisson 2 fixe enfoui dans le sol, un chariot 3 monté coulissant dans le caisson 2 dans le sens vertical entre une position rétractée dans le caisson 2 et une position haute au-dessus du sol, un coffret 4 de distribution d'énergie électrique, un couvercle 5, et un dispositif d'équilibrage par contrepoids 10.

Le caisson 2 comporte quatre parois latérales 6, 6' formant un parallélépipède rectangle et réalisées par exemple en tôle inox pliée. Il est destiné à être scellé dans le sol par tout moyen connu en soi. Autour des parois 6, 6' du caisson 2 sont disposés trois éléments raidisseurs 7 horizontaux en forme de U. Ces raidisseurs 7 sont destinés à rigidifier le caisson 2 en reprenant les efforts horizontaux des matériaux utilisés pour le scellement du caisson 2. A leur extrémité supérieure, les parois 6, 6' sont repliées deux fois à angle droit vers le haut de manière à former un cadre périphérique 8 pour recevoir le couvercle 5.

Le caisson 2 ne présente pas de fond pour permettre l'accès à des câbles d'alimentation électrique souterrains, ou tout autre câble, et reliés au coffret de distribution 4. Ce coffret 4 est de forme parallélépipédique et contient des prises électriques 9 et un disjoncteur disposé à l'intérieur. Il est fermé par une porte d'accès 11 fermant à clé.

A l'intérieur du caisson 2, sur deux parois latérales 6 se faisant face, sont fixés deux rails verticaux 12 par soudure ou vissage. Les rails 12 sont constitués d'une tôle inox pliée et présentent à leur extrémité supérieure une section rectangulaire.

Le chariot 3 est également réalisé en tôle inox pliée. Il présente une section en forme de U, avec deux parois latérales 13 et une face arrière 14. Les dimensions du chariot 3 sont appropriées pour intégrer le coffret 4 entre lesdites parois latérales 13. Sur la face arrière 14 du chariot 3 est réalisée une ouverture verticale 15 rectangulaire et dont les deux parois latérales sont repliées en U vers l'extérieur pour former deux glissières verticales 16. Les glissières 16 sont reliées à leur base par une traverse 17 correspondant à la base de l'ouverture 15. Les glissières 16 présentent une forme complémentaire aux rails 12 de sorte qu'elles peuvent coulisser sur lesdits rails 12 pour constituer les moyens de coulissement. Ces glissières 16 peuvent comporter des patins pour assurer le glissement sans effort des rails 12.

Le couvercle 5 est solidaire du chariot 3. Il est réalisé en tôle inox pliée et est constitué d'un plateau rectangulaire et de quatre rebords verticaux 30 dirigés vers le haut de manière à pouvoir recevoir sur le plateau un revêtement en matières harmonisées au revêtement du sol environnant (béton, bois, aciers, enrobés, pavés, etc.). Le couvercle comprend également sur son plateau des raidisseurs 31 formés de plaques soudées sur le couvercle 5. Le nombre de raidisseurs 31 peut varier en fonction du positionnement de la borne 1 qui peut se trouver aussi bien sur le lieu de passage de piétons que des camions et poids lourds.

Le dispositif d'équilibrage par contrepoids 10 comprend un contrepoids de base 18, un galet à gorge 19 monté sur un palier 20 par un axe 21 et dans lequel passe un câble 22. Le contrepoids de base 18 est de forme parallélépipédique rectangle et réalisé en fer. Il est logé derrière le chariot 2, entre les rails 12 et la paroi arrière 6' du caisson 2. Il présente sur sa face supérieure des ergots 23 pour recevoir des plaques percées (non représentées) constituant des contrepoids additionnels qui s'empilent les uns sur les autres pour permettre un équilibrage parfait du chariot 3 en fonction notamment du poids du revêtement déposé sur le couvercle 5.

Le palier 20 est fixé vers l'extrémité supérieure de la paroi arrière 6' du caisson 2 perpendiculairement au contrepoids de base 18 et entre les rails 12. Il passe ainsi dans l'ouverture 15 du chariot 3 quand le chariot 3 se déplace en position haute. Il est possible de prévoir plusieurs galets 19 et plusieurs paliers 20, le nombre dépendant du poids du chariot.

Le câble 22 a une extrémité 25 fixée au centre du contrepoids de base 18, son autre extrémité 24 étant fixée au centre de la traverse 17 du chariot 3.

Pour maintenir le chariot 3 en position rétractée, il est prévu, soudé sur le plateau du couvercle 5, un verrou 40 à empreinte oblongue et comprenant un loquet 41 pivotant horizontalement et s'engageant en position de verrouillage dans un logement correspondant 42 prévu à l'intérieur du caisson 2, vers l'extrémité supérieure de sa paroi arrière 6'. Ce type de verrou permet d'éviter l'encrassement de l'empreinte par les déchets de toute sorte des voies de passage (rues, places publiques, etc.). Le verrou 40 est actionné par une clé 43 munie d'un double ergot 44 complémentaire à l'empreinte oblongue du verrou 40.

Il est également prévu sur le couvercle 5 entre deux raidisseurs 31 un étrier en U 45 présentant une ouverture oblongue correspondant également au double ergot 44 de la clé 43. La clé 43 présente également une poignée à anneau de préhension 46 de forme ovale. Ainsi, la clé 43 peut être également utilisée pour sortir le chariot 3 du caisson 2.

Pour maintenir le chariot 3 en position haute, il est prévu à l'extérieur d'une paroi latérale 13 du chariot 3, un dispositif de blocage automatique 50. Ce dispositif 50 comprend un élément de blocage 51 monté pivotant au moyen d'un axe décentré 53. Il est de forme sensiblement conique et comporte à sa base un ergot 52 de forme complémentaire à l'extrémité supérieure d'un rail 12. L'élément de blocage 51 est réalisé en tôle acier inox pliée et comporte également un rebord à angle droit 55. Il est limité en rotation au moyen d'une pièce 54 fixée sur la paroi latérale 13 du chariot 3 de manière inclinée et pliée en forme de C pour former deux butées 54'. Le dispositif de blocage automatique 50 est placé sur le chariot à une hauteur telle que l'ergot 52 s'enclenche sur l'extrémité supérieure du rail 12 lorsque le chariot 3 est en position haute.

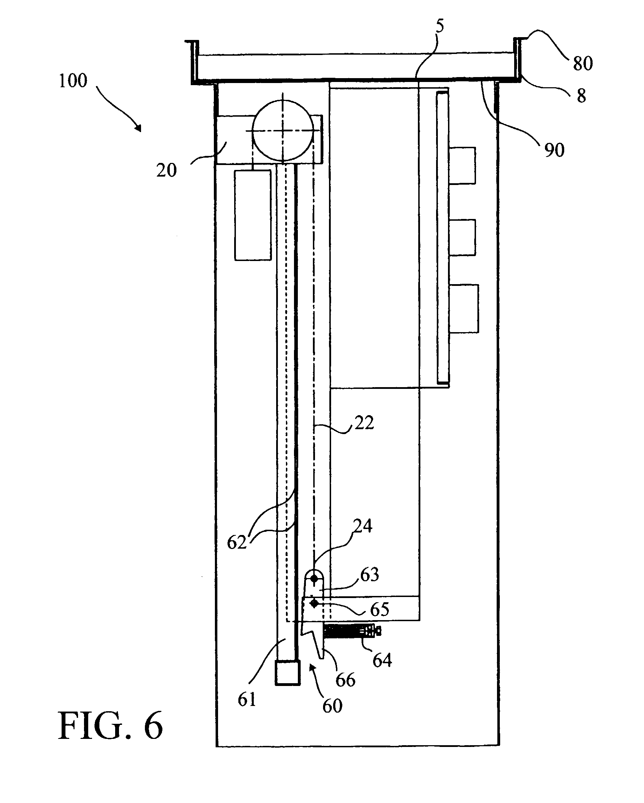

En référence à la figure 6, dans une autre variante, la borne 100, similaire à la borne 1 décrite ci-dessus, présente en outre, un dispositif de sécurité 60 agencé pour empêcher la chute du chariot 3 en cas de défaillance du dispositif d'équilibrage par contrepoids 10. A cet effet, il comporte un rail de sécurité 61, vertical et monté fixe à l'intérieur du caisson 2 sous le palier 20. Le rail de sécurité 61 comprend une pluralité d'orifices 62 répartis sur toute sa hauteur selon des intervalles réguliers. Le dispositif de sécurité 60 comprend également un cliquet 63 relié à l'extrémité 24 du câble 22, monté pivotant autour d'un axe 65 sur le chariot 3 et comportant un doigt 66 agencé pour s'enclencher dans un orifice 62 du rail de sécurité 61. Le cliquet 63 est sollicité par un ressort 64 de sorte qu'en position de fonctionnement normal, le cliquet 63 est dans l'axe du chariot 3 et n'empêche pas son déplacement et qu'en cas de casse par exemple du câble 22 ou de l'axe 21 de la poulie 19, le cliquet 63, libéré de la contrainte du câble 22, est poussé par le ressort 64 en direction du rail de sécurité 61. Le doigt 66 du cliquet s'enclenche alors dans l'orifice 62 le plus proche et bloque le chariot 3 dans cette position.
Le ressort 64 présente une force réglable en fonction du poids du chariot 3.

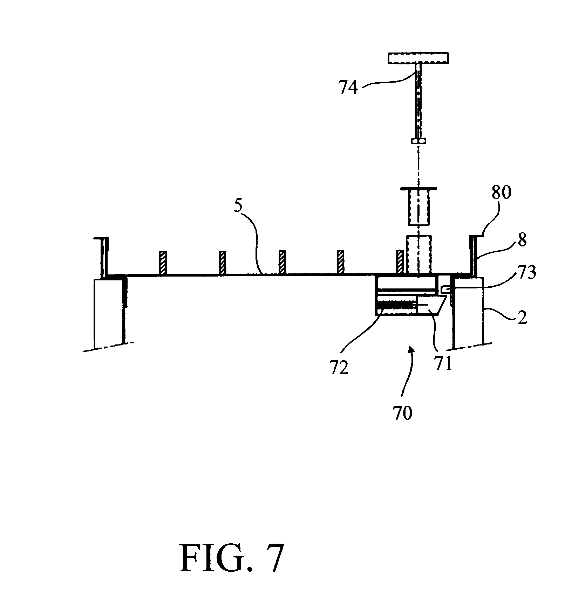

Dans cette variante, la borne 100 comporte un dispositif de verrouillage 70 automatique du chariot 3 en position rétractée. En référence à la figure 7, ce dispositif de verrouillage 70 comprend un pêne biseauté 71 monté mobile sous le couvercle 5 et sollicité par un ressort 72. Il est également prévu, en correspondance sur le caisson 2, un ergot de verrouillage 73 coopérant avec le pêne 71 poussé par le ressort 72 pour verrouiller automatiquement le couvercle 5 lorsque le chariot 3 est ramené en position rétractée. Pour ouvrir le dispositif de verrouillage 70, on utilise une clé 74 qui dégage le pêne 71 de l'ergot de verrouillage 73 et qui est également utilisée comme poignée pour soulever le couvercle 5.

En référence à nouveau à la figure 6, la borne 100 comporte également une cornière périphérique 80 constituée d'un profilé en L et disposée sur le pourtour du couvercle 5 et du cadre périphérique 8 du caisson 2 de manière à empêcher la chute de déchets entre le caisson 2 et le couvercle 5. Il est également prévu une plaque d'étanchéité 90 disposée dans le caisson 2 au niveau du cadre périphérique 8. Cette plaque d'étanchéité 90 comporte une ouverture pour le passage du chariot 3 lorsqu'il passe en position haute. La plaque d'étanchéité est utilisée pour empêcher la chute de déchets dans le caisson 2 lorsque le chariot est en position haute.

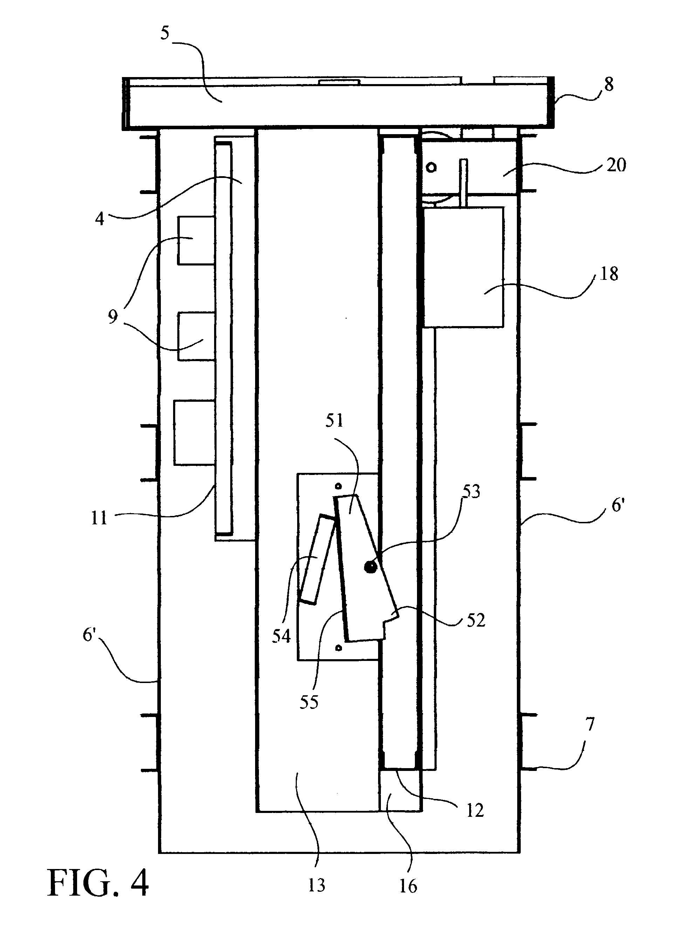

La borne selon l'invention est par exemple implantée dans un lieu public, une rue, une place où se déroulent ponctuellement des manifestations. La borne est encastrée dans le sol de sorte que le couvercle 5 affleure au niveau du sol lorsque le chariot est en position rétractée. Le coffret de distribution d'électricité 4 est raccordé au réseau souterrain alimenté sur commande et le caisson 2 est scellé. Lorsqu'il n'y a pas de manifestations, la borne est rétractée dans le sol et n'est pas visible puisque le couvercle 5 est revêtu de matières correspondant au revêtement environnant. La constitution de la borne lui permet de supporter le passage de piétons ou de véhicules. En référence notamment à la figure 4, le chariot 3 est, en position rétractée, entièrement logé dans le caisson 2, le couvercle 5 reposant sur le cadre 8 du caisson 2. Le coffret 4 est alors inaccessible. Dans cette position, le contrepoids de base 18 est en position haute, sous le palier 20. Le dispositif de blocage 50 est inactif. Le chariot 3 est verrouillé sur le caisson 2 par le loquet 41 engagé dans son logement 42.

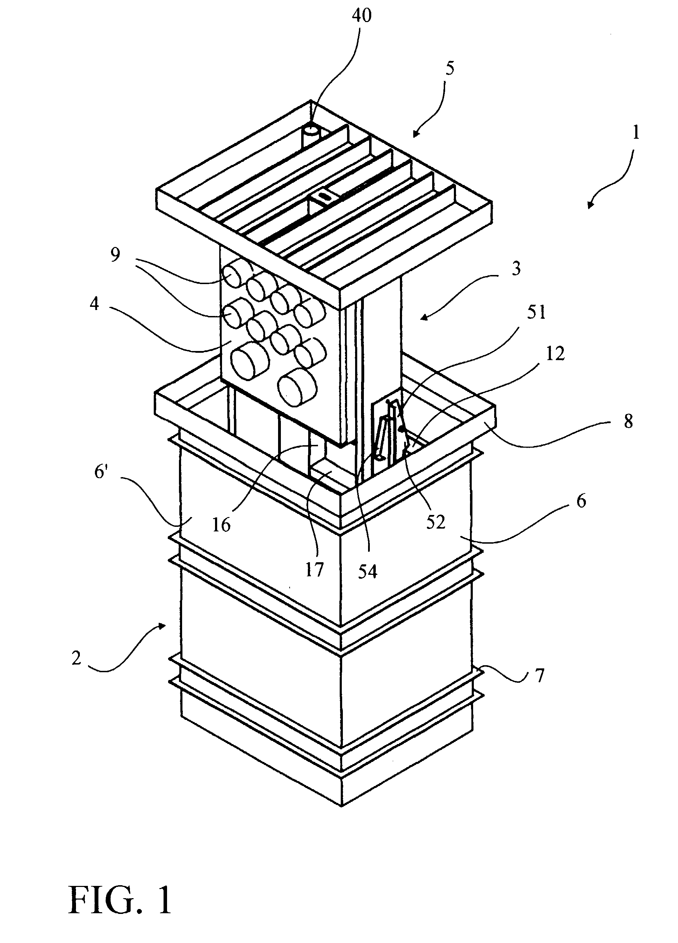

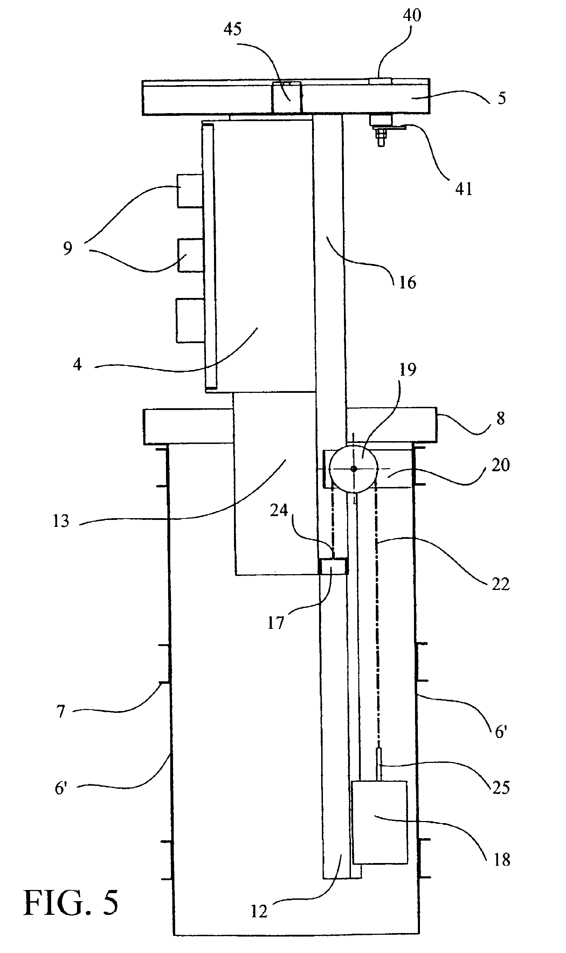

En cas de besoin d'une source électrique, il suffit de manoeuvrer la borne 1 et d'amener le chariot 3 en position haute, ledit chariot 3 restant à l'air libre le temps de son utilisation. Cette manoeuvre peut être réalisée facilement par une seule personne. Il suffit en effet au moyen de la clé 43 d'ouvrir le verrou 40 pour dégager le loquet 41 de son logement 42. Cette même clé 43 est ensuite introduite dans l'étrier 45 pour tirer légèrement vers le haut le couvercle 5 et le chariot 3 et libérer le dispositif d'équilibrage par contrepoids 10. Le contrepoids 18 descend et entraîne la montée du chariot 3 puisque le câble 22 est relié d'une part au contrepoids 18 et d'autre part à la traverse 17 du chariot. Le chariot 3 se déplace verticalement facilement grâce à ses glissières 16 et aux rails 12 jusqu'à sa position haute (cf. Figures 1 et 5). Dans cette position, le coffret 4 et ses prises de courant 9 sont accessibles en toute sécurité, le chariot 3 étant bloqué automatiquement dans sa position haute. En effet, quand le chariot 3 arrive en position haute, l'élément de blocage 51 bute sur l'extrémité supérieure du rail 12 et pivote de sorte que son ergot 52 vient s'enclencher sur le rail 12. Pour débloquer le chariot 3 et le ramener en position rétractée, il suffit de déverrouiller l'élément de blocage 51 par une simple pression horizontale de la main ou du pied pour dégager l'ergot 52 et d'appliquer simultanément une légère pression sur le couvercle 5 pour actionner le dispositif d'équilibrage par contrepoids 10. Le chariot 3 rentre alors dans son caisson 2 et peut être verrouillé. Les moyens de levage du chariot étant constitués uniquement du dispositif d'équilibrage par contrepoids, la borne 1 selon l'invention présente l'avantage de ne pas nécessiter d'entretien et d'être de fonctionnement fiable et sûr. Le dispositif d'équilibrage 10 peut être réglé en ajoutant des contrepoids en fonction du revêtement déposé sur le couvercle 5. On obtient ainsi un équilibrage et un coulissement parfaits du chariot 3.

La présente invention n'est pas limitée à l'exemple de réalisation décrit mais s'étend à toute modification et variante évidente pour un homme du métier. En particulier, la borne selon l'invention peut être utilisée pour distribuer d'autres énergies, telles que l'eau, le gaz, etc.

## Revendications

1. Borne de distribution (1) rétractable comprenant un caisson (2) à sceller dans le sol et fermé par un couvercle (5), un chariot (3) monté coulissant dans ledit caisson (2) grâce à des moyens de coulissement (12, 16), ledit chariot (3) étant agencé pour recevoir un coffret de distribution d'énergie (4), et des moyens de levage coopérant avec lesdits moyens de coulissement (12, 16) du chariot (3) et agencés pour entraîner le déplacement vertical dudit chariot (3) entre une position rétractée dans le caisson (2) et une position haute au-dessus du sol, caractérisée en ce que lesdits moyens de levage sont constitués uniquement d'un dispositif d'équilibrage par contrepoids (10) et en ce que le couvercle (5) est agencé pour former un support pour des matières harmonisées au sol environnant de sorte que la borne, en position rétractée, est invisible.

2. Borne selon la revendication 1, caractérisée en ce que le couvercle (5) présente quatre rebords verticaux (30) dirigés vers le haut de manière à former ledit support pour des matières harmonisées au sol environnant.

3. Borne selon la revendication 1, caractérisée en ce que ledit dispositif d'équilibrage par contrepoids (10) comprend au moins un galet à gorge (19) monté sur un palier (20) fixé au caisson (2), au moins un contrepoids de base (18), et au moins un câble (22) passant dans la gorge du galet (19) et dont une extrémité (25) est reliée au contrepoids de base (18) et l'autre extrémité (24) est reliée au chariot (3).

4. Borne selon la revendication 3, caractérisée en ce que le dispositif d'équilibrage (10) comprend des contrepoids additionnels s'ajoutant au contrepoids de base (18) pour permettre un équilibrage parfait du chariot (3).

5. Borne selon la revendication 4, caractérisée en ce que le contrepoids de base (18) comprend des ergots (23) et en ce que les contrepoids additionnels présentent la forme de plaques percées de manière à s'encastrer sur lesdits ergots (23) et à s'empiler les uns sur les autres.

6. Borne selon la revendication 1, caractérisée en ce que le caisson (2) comporte quatre parois latérales (6, 6') formant un parallélépipède rectangle, lesdites parois étant entourées d'au moins un élément raidisseur horizontal (7) en forme de U.

7. Borne selon la revendication 1, caractérisée en ce que les moyens de coulissement comprennent deux rails verticaux (12) fixés sur deux parois internes (6) en vis-à-vis du caisson (2) et deux glissières verticales (16) en U formées sur la face arrière (14) du chariot (3) et coulissant sur lesdits rails (12).

8. Borne selon les revendications 3 et 7, caractérisée en ce que la face arrière (14) du chariot (3) entre les deux glissières (16) présente une ouverture (15) pour le passage du palier (20) et du câble (22) du dispositif d'équilibrage par contrepoids (10) et en ce que les deux parois latérales de ladite ouverture forment lesdites glissières (16).

9. Borne selon la revendication 8, caractérisée en ce que lesdites glissières (16) sont reliées à leur base par une traverse (17), et en ce qu'une extrémité (24) du câble (22) est reliée à ladite traverse (17).

10. Borne selon la revendication 1, caractérisée en ce qu'elle comprend un dispositif de sécurité (60) agencé pour empêcher la chute du chariot (3) en cas de défaillance du dispositif d'équilibrage par contrepoids (10).

11. Borne selon les revendications 3 et 10, caractérisée en ce que ledit dispositif de sécurité (60) comprend un rail vertical de sécurité (61) fixe disposé à l'intérieur du caisson (2) et présentant plusieurs orifices (62), un cliquet (63) relié au câble (22) du dispositif d'équilibrage (10) et monté pivotant sur le chariot (3) et un ressort (64) agencé pour solliciter le cliquet (63) en direction du rail de sécurité (61) en cas de défaillance et pour enclencher ledit cliquet (63) dans un orifice (62) dudit rail de sécurité (61).

12. Borne selon la revendication 1, caractérisée en ce que le couvercle (5) est solidaire du chariot (3).

13. Borne selon la revendication 1, caractérisée en ce que le couvercle (5) présente sur sa face supérieure des raidisseurs (31).

14. Borne selon la revendication 1, caractérisée en ce qu'elle comprend un dispositif de verrouillage (40, 70) du chariot en position rétractée.

15. Borne selon la revendication 14, caractérisée en ce que ledit dispositif de verrouillage comprend un verrou (40) à loquet (41) prévu dans le couvercle (5), ledit loquet (41) étant agencé pour s'engager dans un logement (42) correspondant prévu sur le caisson (2).

16. Borne selon la revendication 14, caractérisée en ce que le dispositif de verrouillage (70) comprend un pêne (71) mobile sollicité par un ressort (72) pour coopérer avec un ergot de verrouillage (73) prévu en correspondance sur le caisson (2), de manière à verrouiller automatiquement le chariot (3) en position rétractée.

17. Borne selon les revendications 15 et 16, caractérisée en ce que ledit dispositif de verrouillage (40, 70) est actionné par une clé (43, 74) également utilisée comme poignée pour soulever le couvercle (5).

18. Borne selon la revendication 1, caractérisée en ce qu'elle comprend un dispositif de blocage automatique (50) du chariot (3) en position haute.

19. Borne selon les revendications 7 et 18, caractérisée en ce que ledit dispositif de blocage (50) est prévu sur au moins une paroi latérale (13) du chariot et en ce qu'il comprend un élément de blocage (51) monté pivotant et comportant un ergot (52) agencé pour s'enclencher automatiquement sur l'extrémité supérieure du rail (12) quand le chariot (3) est en position haute.

20. Borne selon la revendication 1, caractérisée en ce qu'elle comprend une cornière périphérique (80) disposée sur le pourtour du couvercle (5) et du caisson (8) et agencée pour empêcher la chute de déchets entre le caisson (2) et ledit couvercle (5).

21. Borne selon la revendication 1, caractérisée en ce qu'elle comprend une plaque d'étanchéité (90) disposée à l'intérieur du caisson (2) et comportant une ouverture pour le passage du chariot (3), ladite plaque étant agencé pour empêcher la chute de déchets dans le caisson (2) lorsque le chariot (3) est en position haute.
